# EUROPÄISCHE PATENTSCHRIFT

(11) **EP 2 803 589 B1**
(45) Veröffentlichungstag und Bekanntmachung des Hinweises auf die Patenterteilung: **16.11.2016**
(21) Anmeldenummer: 14165114.1
(22) Anmeldetag: 17.04.2014
(51) Int. Cl.: B65B 13/22, B65B 27/04, G01L 5/04

(54) **Verfahren und Vorrichtung zur Herstellung von Umreifungsgebinden sowie Verfahren zur Erfassung einer Bandspannung solcher Umreifungsgebinde**
Method and device for the preparation of strapping bindings and measuring method for detecting a tape tension of such strapping bindings
Procédé et dispositif de cerclage et agencement de procédé de mesure destiné à détecter la tension d'une bande de cerclage

(30) Priorität: 16.05.2013 DE 102013209145
(43) Veröffentlichungstag der Anmeldung: 19.11.2014
(73) Patentinhaber: Krones Aktiengesellschaft, 93073 Neutraubling (DE)
(72) Erfinder: Unterseher, Josef, 93073 Neutraubling (DE); Elsperger, Stefan, 93073 Neutraubling (DE); Hartl, Michael, 93073 Neutraubling (DE); Kieslinger, Manfred, 93073 Neutraubling (DE)
(74) Vertreter: Benninger, Johannes

(56) Entgegenhaltungen:
- EP-A1- 1 357 371
- EP-A1- 2 206 650
- EP-A1- 2 489 597
- EP-A2- 0 756 163
- EP-B1- 0 296 162
- WO-A1-2011/045440
- WO-A1-2012/033447
- DE-A1- 19 531 858
- DE-C2- 19 616 574
- FR-A1- 2 660 754
- FR-A1- 2 866 290
- GB-A- 2 370 120
- JP-A- H0 811 819
- US-A1- 2004 066 521

## Beschreibung

Die vorliegende Erfindung betrifft ein Verfahren und eine Vorrichtung zur Herstellung eines Umreifungsgebindes, das mindestens zwei miteinander verbundene Artikel wie bspw. Flüssigkeitsbehälter umfasst, die mit einer horizontal um eine Außenseite der Artikel oder Behälter gespannten, band- oder streifenartigen Umreifung zusammengehalten sind. Weiterhin betrifft die Erfindung ein Verfahren zur Erfassung einer Bandspannung solcher Umreifungsgebinde.

Der Aufbau und die Eigenschaften solcher Umreifungsgebinde gehen aus der internationalen Patentanmeldung WO 2011/045440 A1 hervor. Neben diesen bekannten Umreifungsgebinden sind verschiedene weitere Möglichkeiten bekannt und gebräuchlich, einzelne Artikel zu größeren Gebinden zusammenzufassen. So werden bspw. Getränkebehälter oftmals mittels Schrumpffolien zu stabilen, transportablen Gebinden von vier, sechs oder mehr Behältern zusammengefasst und verpackt. Die Herstellung solcher Umreifungs- oder Schrumpfgebinde ist aus praktischen Erwägungen meist unumgänglich, da sie die häufigste Variante von Verkaufseinheiten für Getränkebehälter und Flaschen aus PET-Kunststoff darstellen. Diese Gebinde werden für den Transport zum Zwischen- und/oder Endhandel teilweise zu sog. Großgebinden zusammengefasst und/oder in Lagen zusammengestellt und palettiert.

Die für Umreifungsgebinde eingesetzten Umreifungsbänder können wahlweise aus Metall bestehen. Üblicherweise werden jedoch Bänder aus Kunststoff, insbesondere aus PET eingesetzt, die unter Vorspannung an einer Überlappungsstelle miteinander verschweißt oder verklammert werden. Diese Umreifungsbänder aus Kunststoff lassen sich leicht unter Vorspannung verschweißen und mit gewissem Kraftaufwand unter Zerstörung der verschweißten Verbindungsstelle vom Endkunden wieder lösen, wenn einzelne Behälter vom Gebinde getrennt werden sollen.

Da die nach dem Aufbringen des Umreifungsbandes und nach dem Verschweißen bestehende Bandspannung ein wesentliches Qualitätsmerkmal des Gebindes bildet, ist der Herstellung einer ausreichenden, nicht zu hohen Bandspannung eine gewisse Sorgfalt zu widmen, was in aller Regel durch geeignete Messeinrichtungen in den eingesetzten Umreifungsapplikatoren erfolgen kann. Auf diese Weise kann bereits bei der Umhüllung der Behälter mit dem Umreifungsband für die erforderliche Bandspannung gesorgt werden, die schließlich durch das Verschweißen oder Verkleben des Umreifungsbandes unveränderlich fixiert wird.

Die EP 2 206 650 A1 offenbart eine Vorrichtung zur Ermittlung der Spannung eines Umreifungsbandes, das durch eine Packstückumreifungsmaschine aufgebracht wird. Eine Umlenkrolle, die einen gespannten Abschnitt eines Umreifungsbandes umlenkt, ist in einer Konsole drehbar gelagert, die sich gegenüber einem Maschinengehäuse oder Rahmenabschnitt der Maschine über eine Kraft- oder Druckmessdose abstützt. Auf diese Weise kann die im Umreifungsband herrschende Zugkraft erfasst werden, um auf diese Weise die Bandspannung während der Aufbringung des Umreifungsbandes zu regulieren.

Die EP 2 489 597 A1 beschreibt weiterhin eine Vorrichtung und ein Verfahren zur Herstellung von umreiften Gebinden sowie ein Regelungs- und/oder Steuerungsverfahren für eine Umreifungsvorrichtung. Die Vorrichtung umfasst Einrichtungen zur Erfassung von Eigenschaften der zu umreifenden Artikel, die mit einer Einrichtung zur Erzeugung einer definierten Spannkraft der Umreifung gekoppelt sind. Auf diese Weise soll insbesondere in Abhängigkeit der Artikelnachgiebigkeit eine passende Umreifungsspannung eingestellt werden, um eine zu hohe oder zu niedrige Bandspannung zu vermeiden.

Die JPH0811819 offenbart eine Vorrichtung und ein Verfahren zur Herstellung von Umreifungsgebinden, bei dem mindestens zwei Artikel mit wenigstens einer vertikal um jeweilige Außenseiten der Artikel gespannten, band- oder streifenartigen, geschlossenen Umreifung zusammengehalten und miteinander verbunden werden, welche Umreifung durch ein, zwei oder mehr gleichartige oder unterschiedliche Umreifungsbänder aus Kunststoff oder einem Verbundmaterial gebildet werden, deren Enden unter Aufbringung einer definierbaren Bandspannung aneinander fixiert werden, wonach die Bandspannung des wenigstens einen Umreifungsbandes durch eine mechanische Auslenkung des Umreifungsbandes an wenigstens einer Stelle, die sich zwischen Kontaktstellen des Umreifungsbandes an Außenseiten benachbarter Artikel befindet, und durch Erfassung eines Zusammenhanges zwischen dem Auslenkungsweg und einer hierfür aufzuwendenden Auslenkungskraft gemessen wird.

Sofern die Bandspannung nach dem Aufbringen der Umreifung dennoch zu hoch oder zu gering ist, eignet sich das Gebinde oftmals nicht mehr für einen Verkauf und muss zur Entfernung der den Vorgaben nicht entsprechenden Umreifung und zur Aufbringung einer neuen Umreifung aus dem laufenden Produktions- und/oder Verpackungsprozess ausgesondert werden.

Um diesen Nachteil zu vermeiden, besteht das vorrangige Ziel der vorliegenden Erfindung darin, ein einfach handhabbares und kostengünstiges Verfahren sowie eine entsprechende Vorrichtung zur Verfügung zu stellen, mit denen sich eine Bandspannung bei einem Umreifungsgebinde schnell und zuverlässig, vorzugsweise in einem laufenden Produktions- oder Transportprozess, erfassen lässt.

Dieses Ziel der Erfindung wird mit den Gegenständen der unabhängigen Patentansprüche erreicht, wobei sich Merkmale vorteilhafter Weiterbildungen der Erfindung aus den abhängigen Ansprüchen ergeben. Zur Erreichung des Ziels schlägt die vorliegende Erfindung ein Verfahren zur Herstellung von Umreifungsgebinden vor, bei dem jeweils mindestens zwei Artikel mit wenigstens einer horizontal um jeweilige Außenseiten der Artikel gespannten, band- oder streifenartigen, geschlossenen Umreifung zusammengehalten und miteinander verbunden werden. Die Umreifung wird hierbei durch ein, zwei oder mehr gleichartige oder unterschiedliche Umreifungsbänder aus Kunststoff oder einem Verbundmaterial gebildet, deren Enden unter Aufbringung einer definierbaren Bandspannung aneinander fixiert werden, wonach die Bandspannung des wenigstens einen Umreifungsbandes der Umreifung durch eine Schwingungs- und/oder Impulsanregung des Umreifungsbandes an wenigstens einer Stelle, die sich zwischen Kontaktstellen des Umreifungsbandes an Außenseiten benachbarter Artikel oder Behälter befindet, und durch Erfassung eines Schwingungsverhaltens und/oder einer Impulsantwort des Umreifungsbandes im Bereich oder der Umgebung der angeregten Stelle erfasst wird. Das Umreifungsband wird bei dem erfindungsgemäßen Verfahren an einer Stelle, wo es nicht an den Außenseiten der Behälter anliegt, zu Schwingungen angeregt, bspw. durch mechanisches Anschlagen, Anzupfen, durch einen Luftdruckstoß oder durch Luftschwingungen, die von einem geeigneten Aktor erzeugt und auf die Bandoberfläche des Umreifungsbandes gerichtet werden. Diese Schwingungs- oder Impulsanregung des Bandes wird anschließend erfasst und lässt direkte Rückschlüsse auf die zu messende Bandspannung zu. Sofern ein einmaliger Impuls in das Band eingeleitet werden soll, kann ein solcher mechanischer Impuls bspw. durch einen Druckstoß und/oder durch einen mechanischen Schlag auf das Umreifungsband aufgebracht werden, dessen Impulsantwort erfasst und ausgewertet werden kann. Sowohl die Aufbringung des Druckstoßes als auch die Erfassung der Impulsantwort kann wahlweise rein mechanisch, bspw. durch einen Druckstoß, einen Luftdruckimpuls, einen Schalldruckimpuls o. dgl. erfolgen. Bei diesen vorgeschlagenen Varianten der Impulseinleitung kann die Erfassung der Impulsantwort wahlweise ebenfalls mechanisch, bspw. durch Beschleunigungssensoren o. dgl. oder auch akustisch oder optisch erfolgen, bspw. durch Erfassung der Bandbewegungen nach Aufbringung des Druckstoßes oder durch Erfassung der vom Band erzeugten Schallwellen oder Luftdruckwellen, wenn ein mechanischer Impuls eingeleitet wurde.

In gleicher Weise kann das Nachschwingverhalten des Bandes erfasst werden, wobei hierfür vorzugsweise optische und/oder akustische Verfahren in Frage kommen, wobei alle Verfahren, die Luftschwingungen in der unmittelbaren Bandumgebung erfassen, ebenfalls zu den akustischen Verfahren zu rechnen sind, auch wenn diese Schwingungen u.U. im nicht hörbaren Bereich liegen können. Ein optischer Sensor kann sich in besonderer Weise zur Schwingungserfassung bzw. zur Erfassung des Nachschwingverhaltens des Umreifungsbandes nach einer einmaligen Impulsanregung oder nach einer Schwingungsanregung eignen, da bei einer solchen berührungslosen Distanzmessung die Bandoberfläche optisch erfasst und alle Schwingungen des Bandes präzise ausgewertet werden können.

Bei all den erwähnten Messverfahren, seien sie optischer, akustischer oder mechanischer Art, liefert im Wesentlichen die Frequenz der Bandschwingung nach dessen Anregung eine Aussage über die zu erfassende Bandspannung. Je niederfrequenter die Nachschwingung des Bandes ist und je stärker diese abklingt, desto schwächer ist die Bandspannung und desto größer ist die Wahrscheinlichkeit, dass ein vorgegebener Mindestwert für die erforderliche Bandspannung unterschritten wurde. Je hochfrequenter dagegen die Schwingungs- oder Impulsantwort des Umreifungsbandes dagegen ausfällt und je länger das Band nachschwingt, desto größer ist die Bandspannung und desto größer ist die Wahrscheinlichkeit, dass die Bandspannung ausreichend hoch ist. Allerdings können mit diesen Messverfahren auch Bandspannungen ermittelt werden, die unzulässig hoch sind und zu einer Gefahr führen können, dass die relativ nachgiebigen Kunststoffbehälter beschädigt oder bleibend verformt werden, bspw. durch eine bleibende Einschnürung, was je nach einer zuvor getroffenen Definition ebenfalls als Qualitätsmangel gewertet werden kann, der zu einer Aussonderung solchermaßen zu stark vorgespannter Umreifungsgebinde führen kann.

Wenn auch im vorliegenden Zusammenhang meist von Artikeln die Rede ist, aus denen ein Umreifungsgebinde gebildet ist, so sei an dieser Stelle vorsorglich erwähnt, dass damit grundsätzlich alle Arten von Stückgütern, insbesondere jedoch Behälter, Flüssigkeitsbehälter oder Getränkebehälter gemeint sein können, ohne dass dies jeweils gesondert erwähnt ist. Wenn somit von einem erfindungsgemäßen Verfahren zur Herstellung von Umreifungsgebinden mit wenigstens zwei Artikeln die Rede ist, so sind damit gleichermaßen Umreifungsgebinde mit einer entsprechenden Anzahl von Behälter, Flüssigkeitsbehältern, Getränkebehältern, PET-Behältern etc. gemeint und von der Definition umfasst.

Zur Herstellung des Schlag- oder Druckimpulses kann bspw. ein linear beweglicher mechanischer Stößel eingesetzt werden. Besonders gut kann auch ein drehbar gelagerter Hebel eingesetzt werden, der als Stößel oder Schlagelement fungiert und mit seinem Kopf mit definierter Aufschlaggeschwindigkeit auf einer definierten Stelle der Umreifung auftreffen kann. Darüber hinaus eignen sich auch andere Varianten zur Herstellung eines Druckimpulses wie bspw. Druckdüsen zum Ausstoß von Druckluft oder Schallwandler zur Herstellung einer Druckwelle durch Luftübertragung o. dgl.

Zur Erfassung der Impulsantwort eignen sich Beschleunigungssensoren, die bspw. innerhalb der Stößel angeordnet oder mit diesen gekoppelt sein können. Diese Sensoren messen die Beschleunigung, die der Stößel bei seinem Aufprall auf das Umreifungsband erfährt. Das Messprinzip beruht im Wesentlichen darauf, dass durch den verwendeten Stößel oder Klöppel das Umreifungsband quer zur Transportrichtung des Umreifungsgebinde oder auch in Transportrichtung angestoßen wird, ohne dass hierdurch das Gebinde verschoben wird. Letzteres wird durch eine geeignet geringe Masse des Stößels oder Klöppels erreicht, die nicht ausreicht, um das Gebinde zu verschieben. Die Verzögerung des Stößels und/oder Klöppels am Band kann gemessen werden. Je härter das Umreifungsband gespannt ist, desto höher ist der resultierende Verzögerungswert (in m/s²). Aus der Verzögerung des Stößels oder Klöppels kann die Bandspannung ermittelt werden. Die Verzögerung kann sensorisch mit verschiedenen Mitteln erfasst werden. z.B. mit geeigneten Halbleiterbeschleunigungssensoren, Festkörpermikrofonen oder auch mit einer Wegerfassung über die Zeit und anschließender zweimaliger Differentiation in der Steuerung. Der Stößel oder Klöppel kann wahlweise linear oder in rotatorischer Bewegung arbeiten. Die Auslenkung kann über Federkraft, motorisch oder pneumatisch erzeugt werden. Anhand der Messung können die Bandspannung oder andere relevante Parameter automatisch oder manuell nachgeführt bzw. geändert werden. Normalerweise wird beim erfindungsgemäßen Verfahren jedoch nicht die Einrichtung zur Impuls- oder Schwingungsanregung unmittelbar mit einem Sensor ausgestattet, sondern dieser erfasst nach erfolgter Impuls- oder Schwingungsanregung selbständig das weitere Nachschwingverhalten des Bandes, ohne dass eine direkte Koppelung mit einem mechanisch wirkenden Element zur Impuls- oder Schwingungserzeugung vorgesehen ist.

Optional kann aus der Erfassung der Bandspannung auch der Innendruck bzw. die Härte der zu umreifenden Behälter hergeleitet bzw. grob überschlagen werden, was eine zusätzliche Einflussnahme auf weitere Prozessparameter erlaubt, bspw. auf einen einzustellenden Fülldruck oder einen Begasungsdruck etc.

Vorzugsweise wird bei dem erfindungsgemäßen Verfahren die Bandspannung innerhalb eines vorgebbaren Bandabschnittes des Umreifungsbandes gemessen, der sich ungefähr mittig zwischen zwei benachbarten Artikeln des vom Umreifungsband zusammengehaltenen Umreifungsgebindes befindet. Auf diese Weise können reproduzierbare Schwingungs- und/oder Impulsantworten erwartet und generiert werden, die einen eindeutigen Rückschluss auf die Bandspannung erlauben und deshalb ein eindeutiges Messsignal liefern, das Auskunft über die Umreifungsqualität geben kann.

Um jedes einzelne Gebinde hinsichtlich seiner Bandspannung zu überprüfen, kann die Bandspannung wenigstens eines Umreifungsbandes jedes Umreifungsgebindes einer Folge von nacheinander umreiften und hintereinander transportierten Umreifungsgebinden erfasst und zur Steuerung einer Ausschleuseinrichtung herangezogen werden, was es erlaubt, die betroffenen Umreifungsgebinde aus dem Gebindestrom auszusondern, bei denen eine erfasste Bandspannung außerhalb eines vorgebbaren Sollbereichs liegt. Bei der Erfassung der Impulsantwort wird ermittelt, ob die Beschleunigung innerhalb eines Sollwertbereichs liegt. Ist dies der Fall, handelt es sich um ein einwandfreies Gebinde. Wird der Sollwert verfehlt, kann das Gebinde problemlos aus dem stetigen Förderprozess ausgesondert werden, ohne dass die übrigen Gebinde hierdurch beeinflusst oder deren Transport beeinträchtigt wird. Somit wird in vorteilhafter Weise ein stetiges Messverfahren zur Verfügung gestellt, dass während eines Gebindetransports durchgeführt werden kann. Auf diese Weise können "schlecht umreifte" Gebinde während ihres stetigen Transports ausgesondert und bspw. einer Nachbesserung zugeführt werden.

Weiterhin umfasst die vorliegende Erfindung ein Verfahren zur Erfassung einer Bandspannung von Umreifungsgebinden, die jeweils mindestens zwei Artikel oder Behälter umfassen, die mit wenigstens einer horizontal um die Außenseiten der Artikel oder Behälter gespannten, band- oder streifenartigen, geschlossenen Umreifung zusammengehalten und miteinander verbunden sind, wobei die Umreifung durch ein, zwei oder mehr gleichartige oder unterschiedliche Umreifungsbänder aus Kunststoff oder einem Verbundmaterial gebildet ist, deren Enden mit definierbarer Bandspannung aneinander fixiert sind. Bei diesem Mess- oder Erfassungsverfahren wird die Bandspannung des wenigstens einen Umreifungsbandes der Umreifung durch eine Schwingungs- und/oder Impulsanregung des Umreifungsbandes an wenigstens einer Stelle, die sich zwischen Kontaktstellen des Umreifungsbandes an Außenseiten benachbarter Artikel oder Behälter befindet, und durch Erfassung eines Schwingungsverhaltens und/oder einer Impulsantwort des Umreifungsbandes im Bereich oder der Umgebung der angeregten Stelle erfasst. Alle oben genannten Ausführungsvarianten und Verfahrensparameter, die sich auf das erfindungsgemäße Verfahren zur Herstellung eines Umreifungsgebindes beziehen, betreffen gleichermaßen das hier erwähnte Messverfahren.

Zur Erreichung des oben genannten Ziels umfasst die Erfindung zudem eine Vorrichtung zur Herstellung von Umreifungsgebinden, die jeweils mindestens zwei Artikel mit wenigstens einer horizontal um Außenseiten der Artikel gespannten, band- oder streifenartigen, geschlossenen Umreifung zur Verbindung und Fixierung der Artikel aneinander umfassen. Die Vorrichtung umfasst eine Fördereinrichtung zur ununterbrochenen oder zyklischen Förderung von Artikelgruppen zu einer Umreifungseinrichtung, die zur Aufbringung von einem, zwei oder mehr gleichartigen oder unterschiedlichen Umreifungsbändern aus Kunststoff oder einem Verbundmaterial um die Außenseiten der Artikel unter gleichzeitiger Aufbringung einer definierbaren Bandspannung und anschließender Fixierung von Bandenden aneinander zur Herstellung der Umreifung vorbereitet und ausgestattet ist. Zudem umfasst die Erfindung ein Verfahren zur Erfassung einer Bandspannung gemäss Anspruch 10.

Bei diesem Verfahren kann die Aufbringung der Schwingungsanregung des Bandes bspw. durch eine mechanische Schlag-, Anreiß- oder Zupfeinrichtung o. dgl. erfolgen, wahlweise jedoch auch durch eine berührungslos arbeitende Einrichtung zur Erzeugung eines Druck- bzw. Luftdruckstoßes, einer Luft- oder Schallschwingung o. dgl., die das Umreifungsband an einer definierten Stelle, wo es frei schwingen kann, zu einer Schwingung anregt, deren weiterer Verlauf anschließend gemessen und zur Herleitung der Bandspannung ausgewertet werden kann. Wahlweise kann bei diesem Verfahren die zur Aufbringung eines mechanischen Impulses auf das Umreifungsband bspw. durch einen linear oder rotatorisch beweglichen, mechanisch wirkenden Stößel erfolgen, wodurch der mechanische Impuls mittels Druckstoß und/oder durch einen mechanischen Schlag auf das Umreifungsband aufgebracht wird, dessen Schwingungs- und/oder Impulsantwort erfasst und ausgewertet werden kann.

Wie oben erwähnt, muss der Druckstoß nicht zwingend berührungsfrei, sondern kann auch durch mechanische Berührung erfolgen. Wahlweise kann die Schwingungsanregung auf sehr unterschiedliche Weise erfolgen, bspw. durch einen mechanischen Druckstoß, durch Übertragung von Druckwellen in der Luft, durch Schalldruck etc..

Die Einrichtung zur Erfassung des Schwingungsverhaltens des Umreifungsbandes nach seiner Anregung bzw. zur Erfassung der Impulsantwort kann bspw. einen Kraftsensor, einen Drucksensor und/oder einen Beschleunigungssensor umfassen, der/die mit einer Auswerteschaltung zur Erfassung und Auswertung der Sensorsignale und zur Herleitung der Bandspannung gekoppelt ist/sind. Besonders vorteilhaft lassen sich als Sensoren auch berührungslos arbeitende Druck- oder Schwingungssensoren einsetzen, welche die Luftschwingungen in der unmittelbaren Umgebung des Umreifungsbandes und damit dessen Schwingungsverhalten erfassen können. Vorteilhaft lassen sich auch optische Sensoren einsetzen, die eine Schwingungsfrequenz des Bandes auf optischem Wege erfassen können. Die Frequenz der angeregten Schwingungen des Bandes und deren Dämpfungsgrad liefern eine direkte Information über die Bandspannung, die wiederum ein Qualitätskriterium bei den betrachteten Umreifungsgebinden darstellt, da eine zu schwach gespannte Umreifung den Gebinden nicht die erforderliche Stabilität liefert, während eine zu stark gespannte Umreifung die Gefahr mit sich bringt, das einzelne Behälter beschädigt oder zumindest optisch beeinträchtigt werden, was zu vermeiden ist.

Die Ausführungsvariante der erfindungsgemäßen Vorrichtung kann zur Durchführung des oben beschriebenen Verfahrens zur Bandspannungsmessung dienen, so dass die dort erläuterten Verfahrensparameter gleichermaßen für die hier in verschiedenen Ausführungsvarianten beschriebene Vorrichtung zur Herstellung von Umreifungsgebinden gelten. Sinnvollerweise sind die Stößel oder Klöppel bzw. die Einrichtungen zur Aufbringung eines Druckstoßes oder einer Schwingungsanregung so angeordnet, dass die Bandspannung innerhalb eines vorgebbaren Bandabschnittes des Umreifungsbandes gemessen wird, der sich ungefähr mittig zwischen zwei benachbarten Artikeln des vom Umreifungsband zusammengehaltenen Umreifungsgebindes befindet. Auf diese Weise können reproduzierbare Messergebnisse gewährleistet werden, die bei aufeinander folgenden Gebinden jeweils gleiche Messergebnisse liefern können, sofern die Bandspannungswerte jeweils übereinstimmen.

Die erfindungsgemäße Vorrichtung kann vorteilhaft mit einer steuerbaren Ausschleuseinrichtung gekoppelt sein, die Umreifungsgebinde aus dem Gebindestrom aussondert, bei denen eine erfasste Bandspannung außerhalb eines vorgebbaren Sollbereichs liegt.

Die vorliegende Erfindung umfasst schließlich ein Verfahren zur Erfassung einer Bandspannung von Umreifungsgebinden, die jeweils mindestens zwei Artikel mit wenigstens einer horizontal um Außenseiten der Artikel gespannten, band- oder streifenartigen, geschlossenen Umreifung zur Verbindung und Fixierung der Artikel aneinander umfassen. Bei diesem erfindungsgemäßen Verfahren wird das Umreifungsband zu Schwingungen angeregt oder ein mechanischer Impuls auf wenigstens ein Umreifungsband der Umreifung aufgebracht und eine Impulsantwort auf den mechanischen Impuls erfasst. Erfindungsgemäss sieht das Verfahren die Anregung einer Schwingung und/oder die Aufbringung eines Impulses auf wenigstens ein Umreifungsband der Umreifung an einer Stelle vor, die sich zwischen Kontaktstellen des Umreifungsbandes an Außenseiten benachbarter Artikel oder Behälter befindet, wo also das Umreifungsband weitgehend frei schwingen und wo diese Schwingung weitgehend ungehindert abklingen kann, was jeweils optisch, durch Luftschwingungsmessung und/oder auf andere Weise gemessen und ausgewertet werden kann.

Wahlweise kann die Einrichtung zur Aufbringung des mechanischen Impulses auf das Umreifungsband einen linear oder rotatorisch beweglichen, mechanisch wirkenden Stößel umfassen. Die Einrichtung zur Erfassung der Impulsantwort kann bspw. ein Kraftsensor, ein Drucksensor und/oder ein Beschleunigungssensor sein, der/die mit einer Auswerteschaltung zur Erfassung und Auswertung der Sensorsignale und zur Herleitung der Bandspannung gekoppelt ist/sind.

Darüber hinaus eignet sich als Einrichtung zur Schwingungsanregung ein akustisch arbeitender oder Luftschwingungen erzeugender Aktor oder bspw. eine Einrichtung zur Erzeugung zeitlich begrenzter Luftdruckstöße, was allesamt berührungslos arbeitende Aktoren sind. Auch die Sensoren zur Schwingungserfassung können berührungslos arbeiten, da sich hierfür bspw. Sensoren eignen, die Luftdruckschwankungen oder Schallschwingungen erfassen. Auch optische Sensoren können vorteilhaft eingesetzt werden, die das Schwingungsverhalten der Bandoberfläche des Umreifungsbandes abtasten und berührungslos erfassen können.

Es ist eine bekannte Verpackungsart, Flaschen und Flüssigkeitsbehälter wie Getränkebehälter in Formationen von z.B. 2x3 oder 2x2 Flaschen oder Behältern zu gruppieren und mit einem Band zu Gebinden zusammenzuspannen. Die Qualität solcher sog. Umreifungsgebinde bemisst sich an der Spannkraft des Bandes, welches die Flaschen oder Behälter umschließt. Da die häufig verwendeten PET-Behälter relativ dünnwandig und damit nachgiebig sind, ist sowohl eine zu straff gespannte Umreifung aufgrund der mechanischen Belastung der Behälter als auch eine zu schwach gespannte Umreifung aufgrund des ungenügenden Zusammenhaltes der einzelnen Behälter im Gebinde zu vermeiden. Aus diesem Grund schlägt die Erfindung vor, bei einzelnen Gebinden, vorzugsweise jedoch bei allen Gebinden innerhalb eines Förderstroms, die effektive Bandspannung nach der Aufbringung des Gebindes im Interesse einer umfassenden Qualitätskontrolle vor der Endverpackung der Gebinde zu erfassen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht eines Umreifungsgebindes mit insgesamt sechs mittels eines Umreifungsbandes zusammengehaltenen Behältern und einer ersten Variante einer Messanordnung zur Ermittlung einer Bandspannung.
Fig. 2 zeigt eine schematische Perspektivansicht eines Umreifungsgebindes mit einer zweiten Variante der Messanordnung zur Ermittlung der Bandspannung.
Fig. 3 zeigt eine schematische Darstellung der Messanordnung zur Messung einer Bandspannung der Umreifung.
Fig. 4 zeigt eine Ausführungsvariante der Messanordnung mit einem linear beweglichen Stößel zur Anregung einer Schwingung im Umreifungsband.
Fig. 5 zeigt eine alternative Ausführungsvariante der Messanordnung mit einem rotatorisch beweglichen Hammer zur Schwingungseinleitung.
Fig. 6 zeigt eine Ausführungsvariante einer erfindungsgemäßen Vorrichtung zur Herstellung von Umreifungsgebinden mit einer Messanordnung zur Erfassung der Bandspannung der Umreifungsgebinde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Bei den nachfolgend beschriebenen Umreifungsgebinden 10 bzw. den nachfolgend beschriebenen Verkaufseinheiten sind jeweils mehrere Artikel 12 zu Gebinden 10 zusammengefasst. Die Artikel 12 sind hierbei jeweils durch Getränkebehälter 14 gebildet. Die Gebinde 10 werden durch Umreifen der Behälter 14 mit Hilfe von flexiblen Bändern aus Kunststoff oder aus anderen Materialien, insbesondere aus PP oder PET gebildet. Grundsätzlich sind mit der aufgezeigten Verbindungsart "Behälterumreifen" alle denkbaren geometrischen Anordnungen der Behälter 14 möglich: Lineare Matrixanordnung in einer n x m-Anordnung von Zeilen und Spalten für runde oder rechteckige, quadratische oder andere Behälter sowie z.B. Kugelpackungen im 30°- bzw. 60°-Winkel bei runden Behältern 14 in beliebiger Anzahl. Die Anordnung der Gebinde 10 und ihrer Artikel 12 oder Behälter 14 ist abhängig von der Zuführung der Behälter 14 und deren Einteilung durch sog. Behältereinteiler innerhalb eines hier nicht näher ausgeführten Zuführabschnittes.

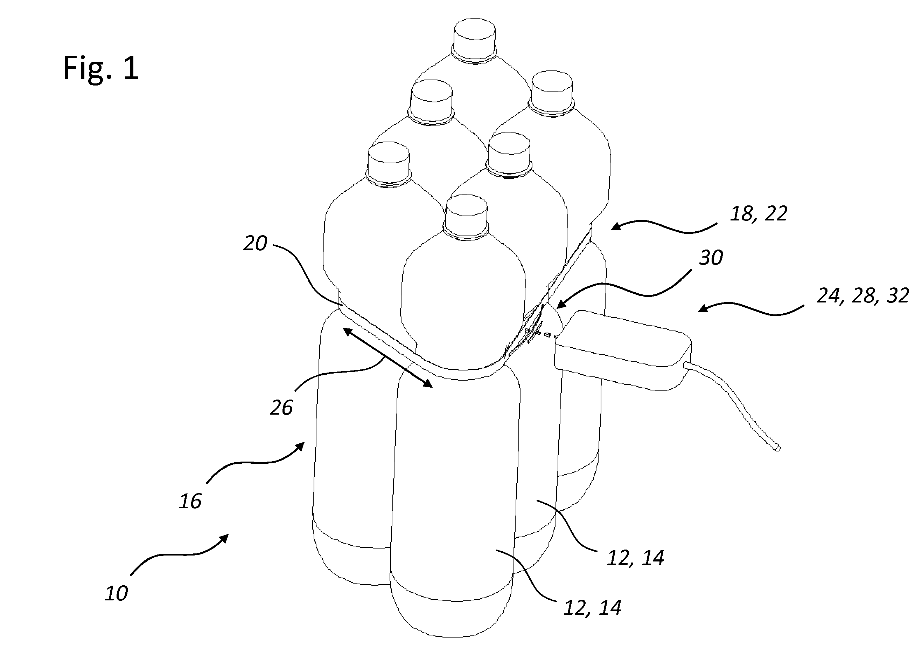

Die Fig. 1 zeigt eine perspektivische Ansicht eines solchen Umreifungsgebindes 10. Bei der Gebindeanordnung sind die Artikel 12 bzw. Behälter 14 nebeneinander in einer sog. Längsformation angeordnet. Das Gebinde 10 setzt sich im vorliegenden Beispiel aus sechs miteinander verbundenen PET-Behältern 14 zusammen, die mit einer horizontal um eine Außenseite 16 der PET-Behälter 14 gespannten, band- oder streifenartigen Umreifung 18 zusammengehalten sind. Die Umreifung 18 ist durch ein flaches Umreifungsband 20 aus Kunststoff gebildet, das um die Artikel 12 bzw. Behälter 14 gespannt und mit seinen überlappenden freien Enden unter Aufbringung einer Vorspannung fixiert ist. Die Umreifung 18 bzw. das Umreifungsband 20 ist an der Kontaktstelle mittels einer stoffschlüssigen Verbindung, bspw. in Form wenigstens einer Schweißverbindung oder einer Klebeverbindung fixiert. Wahlweise kann zudem ein schlaufenartiger Tragegriff (hier nicht dargestellt) vorgesehen sein, der die Oberseiten des Gebindes 10 in schräger bzw. diagonaler Richtung überspannt. Im gezeigten Ausführungsbeispiel ist die Umreifung 18 in einem oberen Bereich um die Behälter 14 gespannt und liegt in einer sog. Griffmulde 22, durch welche die Behälter 14 tailliert sind.

Weiterhin zeigt die Fig. 1 einen Teil einer Messanordnung 24, die der Erfassung einer Bandspannung 26 dient, mit der das Umreifungsband 20 in einem vorhergehenden Fertigungsschritt gespannt wurde, bevor es an seinen überlappenden Enden fixiert und das Gebinde 10 damit in seiner Gestalt hergestellt wurde. Die gezeigte Messanordnung 24 umfasst eine Einrichtung 28 zur Anregung einer Schwingung und/oder zur Aufbringung eines Impulses auf das Umreifungsband 20 an einer Anregungsstelle 30, die sich zwischen Kontaktstellen des Umreifungsbandes 20 an Außenseiten 16 benachbarter Artikel 12 oder Behälter 14 befindet, so dass das Band 20 dort weitgehend frei schwingen kann. Zudem umfasst die Messanordnung 24 eine Einrichtung 32 zur Erfassung des Schwingungsverhaltens und/oder einer Impulsantwort des Umreifungsbandes 20 im Bereich oder der Umgebung der angeregten Stelle 30.

Im gezeigten Ausführungsbeispiel der Fig. 1 kann die Einrichtung 28 zur Erzeugung der Schwingungsanregung bspw. durch Luftdruck- oder Ultraschallerzeugung die gewünschten Schwingungen anregen. Die Erfassungseinrichtung 32 muss auf das entsprechende Messprinzip abgestimmt sein und diesem Fall zur Erfassung der angeregten Schwingungen in der Lage sein.

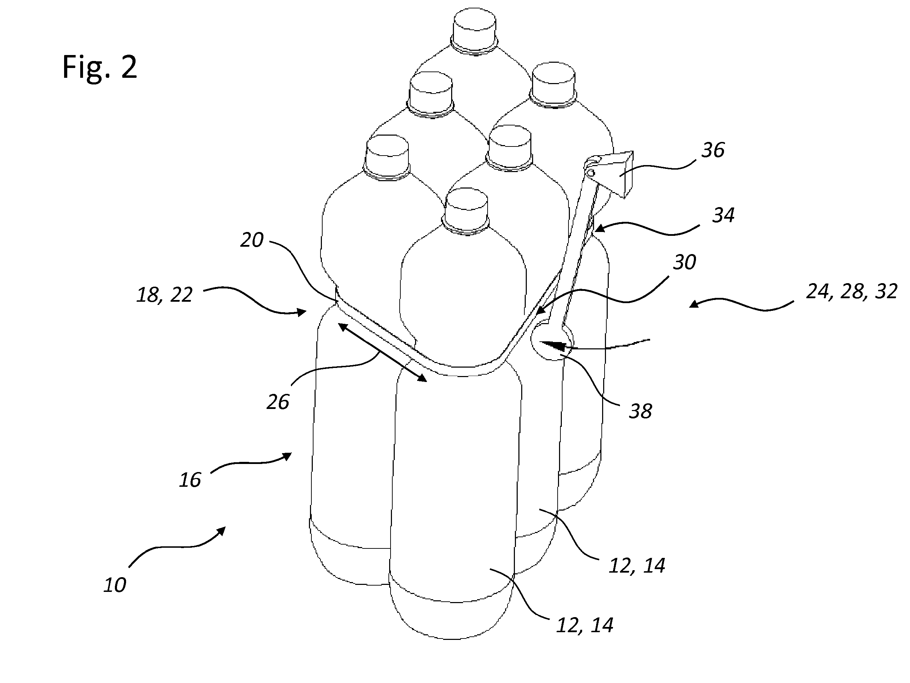

Die schematische Darstellung der Fig. 2 zeigt eine alternative Ausführungsvariante der Messanordnung 24, bei der die Einrichtung 28 zur Schwingungsanregung durch einen schwenkbaren Hammer 34 mit einer ortfesten Schwenklagerung 36 und einem auf das Umreifungsband 20 aufschlagbaren Hammerkopf 38 gebildet ist. Durch Aufschlagen des Hammerkopfes 38 auf die Anregestelle 30, die sich auch hier zwischen Kontaktstellen des Umreifungsbandes 20 an Außenseiten 16 benachbarter Artikel 12 oder Behälter 14 befindet, so dass das Band 20 dort weitgehend frei schwingen kann, wird die Schwingung angeregt bzw. ein Impuls eingeleitet, dessen Schwingungs- oder Impulsantwort mit einer Erfassungseinrichtung 32 entsprechend Fig. 1 oder gemäß einer der nachfolgenden Figuren zur Ermittlung der Bandspannung 26 erfasst werden kann.

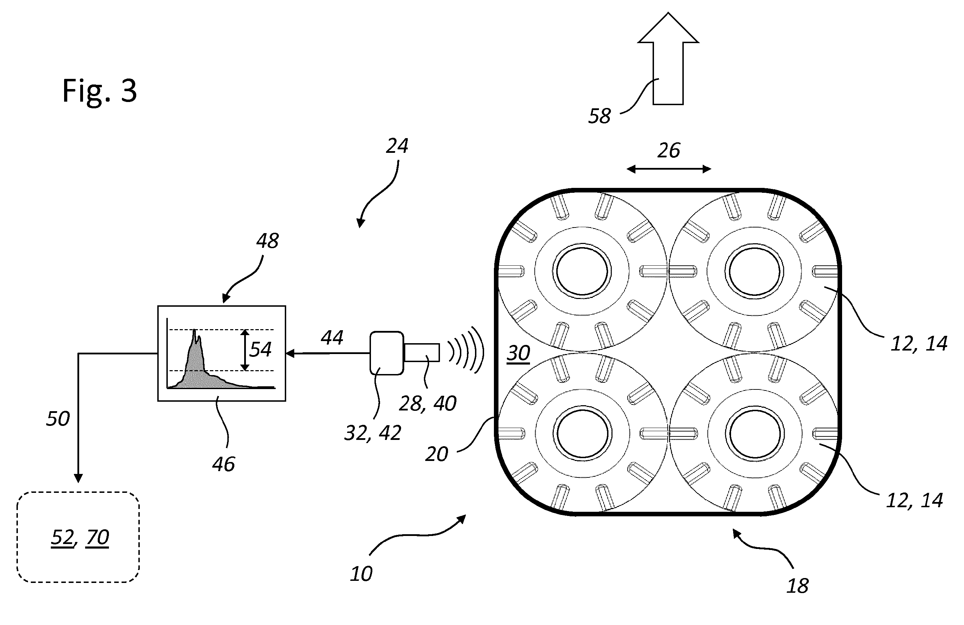

Die schematische Darstellung der Fig. 3, die ein 2x2-Gebinde 10 mit insgesamt vier Behältern 14 bzw. Artikeln 12 in einer Draufsicht von oben zeigt, verdeutlicht gleichermaßen die wesentlichen Komponenten der erfindungsgemäßen Messanordnung 24, die der Erfassung einer Bandspannung 26 am Umreifungsgebinde 10 dient. Die Messanordnung 24 umfasst die hier lediglich angedeutete Einrichtung 28 zur Erzeugung einer Schwingungsanregung am Umreifungsband 20 der Umreifung 18, und zwar im Anregungsbereich 30, der sich zwischen Kontaktstellen des Umreifungsbandes 20 an Außenseiten 16 benachbarter Artikel 12 oder Behälter 14 befindet, so dass das Band 20 dort weitgehend frei schwingen kann. Die Einrichtung 28 zur Erzeugung der Schwingungsanregung kann bspw. durch einen Schallwandler 40, Schalldruckerzeuger, einen Wandler zur Erzeugung eines Druckstoßes o. dgl. gebildet sein, der jeweils in der Lage sein muss, die gewünschte Schwingungsanregung im Anregungsbereich 30 des Bandes 20 zu erzeugen, die nachfolgend zur Ermittlung der Bandspannung 26 mit vertretbarem Aufwand gemessen werden können muss.

Der Anregungseinheit 28 ist die oben erwähnte Einrichtung 32 zur Erfassung des Schwingungsverhaltens und/oder einer Impulsantwort des Umreifungsbandes 20 im Bereich oder der Umgebung der angeregten Stelle 30 zugeordnet, die insbesondere durch eine geeignete Sensoreinheit wie bspw. einen Schalldrucksensor 42, ein Mikrofon, ein Luftschwingungssensor oder auch einen optischen Sensor zur Erfassung des sich optisch ausdrückenden Schwingungsverhaltens des Bandes 20 gebildet sein kann.

Die Sensorsignale 44 des Schalldrucksensors 42 oder Mikrofons werden an eine Auswerteeinrichtung 46 übermittelt, die wahlweise über eine Anzeigeeinrichtung 48 verfügt, vorzugsweise jedoch Steuersignale 50 generiert, um weitere, hier nicht dargestellte Maschinenkomponenten 52 anzusteuern, die bspw. für eine Ausschleusung oder Aussonderung von solchen Umreifungsgebinden 10 sorgen können, deren Bandspannung 26 von der Auswerteeinrichtung 46 als unzureichend oder als zu hoch erkannt und klassifiziert wurde.

Wahlweise kann die Einrichtung 28 zur Schwingungsanregung auch durch einen linear verschiebbaren Stößel, den schwenkbaren Hammer 34 gemäß Fig. 2 oder eine andere geeignete Einrichtung gebildet sein, der ein geeigneter Sensor zuzuordnen ist.

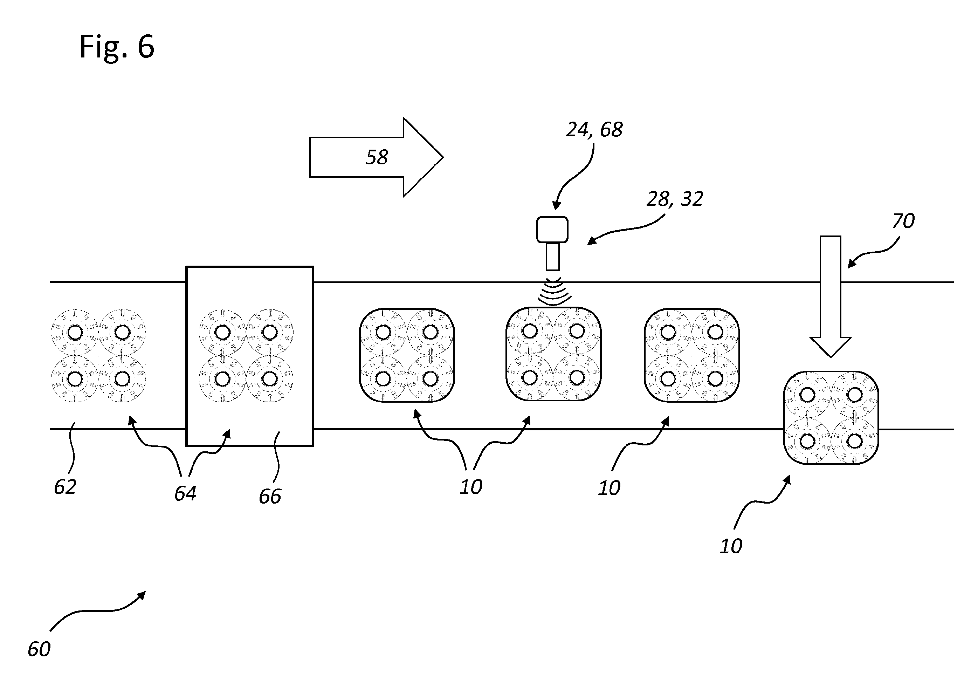

Das Sensorsignal 44 kann durch seine Frequenz und seinem Verlauf über die Zeit eine Aussage über die Bandspannung 26 liefern, da ein nicht ausreichend straffes Band 20 eine Schwingungsantwort mit stärkerer Dämpfung und niedrigerer Frequenz liefert als ein ausreichend straff gespanntes Band 20. Dessen angeregte Bandschwingung liegt tendenziell in einem höheren Frequenzbereich und ist schwächer gedämpft. Sofern die durch Auswertung des Ausgangssignals 44 gemessene Bandspannung 26 nicht innerhalb eines definierten Sollwertbereichs 54 liegt, der durch zwei horizontale Linien im Bereich der Anzeigeeinrichtung 46 angedeutet ist, ist die Bandspannung 26 entweder unzureichend oder zu hoch, was beides einen Qualitätsmangel des betroffenen Umreifungsgebindes 10 anzeigt. Sofern das gemessene Signal außerhalb des vorgebbaren Sollwertbereichs 54 liegt, kann das Steuersignal 50 bspw. zur Ansteuerung eines geeigneten, hier nicht näher dargestellten Schiebers einer Ausschleuseinrichtung 70 (vgl. Fig. 6) oder anderen Aktors dienen, mit dem das betroffene Gebinde 10 aus dem Förderstrom einer Mehrzahl von hintereinander transportierten Gebinden 10 ausgesondert bzw. ausgeschleust werden kann.

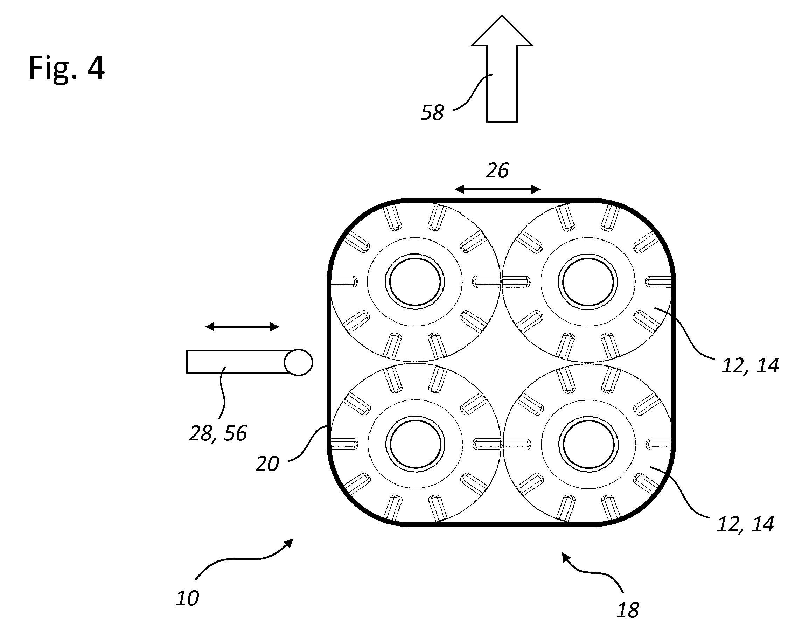

Die schematische Draufsicht der Fig. 4 verdeutlicht die bereits zuvor gezeigte Variante zur Bandspannungsmessung, bei der die Einrichtung 28 zur Aufbringung eines Impulses auf die Umreifung 18 bzw. zur Schwingungsanregung durch einen linear und senkrecht zur Oberfläche des Umreifungsbandes 20 beweglichen Stößel 56 gebildet ist, der mit einem hier nicht dargestellten Kraft-, Druck- oder Beschleunigungssensor in einer Weise gekoppelt ist, dass dieser Sensor die Impulsantwort bzw. die Verzögerung an der straff gespannten Umreifung 18 erfassen und daraus ein Ausgangssignal generieren kann, aus dem die Bandspannung 26 errechnet werden kann. Typischerweise dient der Stößel jedoch zur Schwingungseinleitung, wonach mit einem hier nicht dargestellten Sensor der weitere Schwingungsverlauf erfasst und daraus die Bandspannung 26 ermittelt wird. Die Transportrichtung 58, in der eine Vielzahl von gleichartigen Gebinden 10 in einem ununterbrochenen Förderstrom transportiert werden, während die Bandspannung 26 mit der Einrichtung 28 bzw. dem Stößel 56 gemessen wird, ist durch einen nach oben gerichteten Pfeil beispielhaft angedeutet.

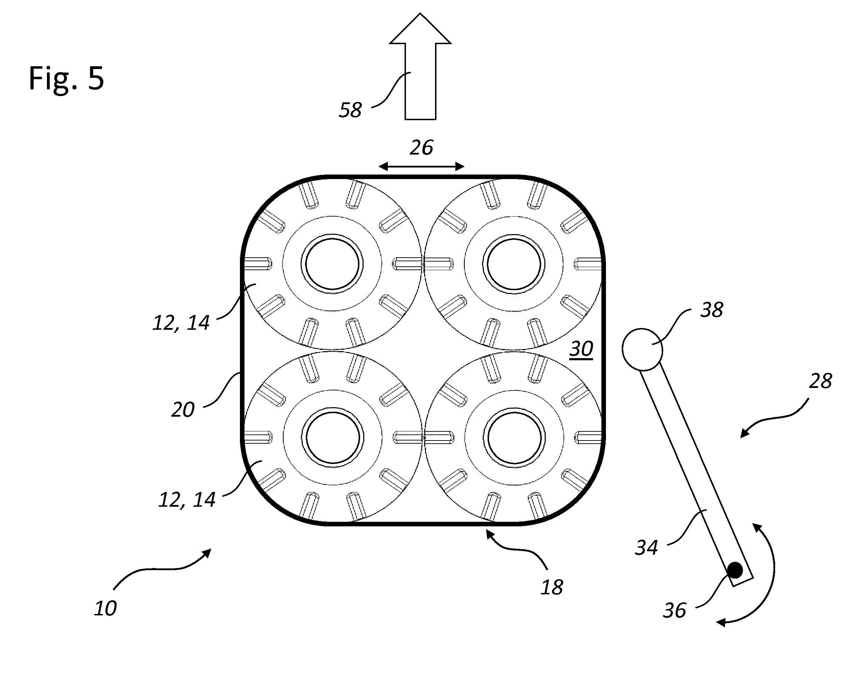

Die schematische Draufsicht der Fig. 5 verdeutlicht nochmals die bereits in Fig. 2 gezeigte alternative Ausführungsvariante zur Bandspannungsmessung, bei der die Einrichtung 28 zur Aufbringung eines Impulses auf die Umreifung 18 bzw. zur Schwingungsanregung durch den rotatorisch und senkrecht zur Oberfläche des Umreifungsbandes 20 beweglichen Hammer 34 gebildet ist, der mit einem hier nicht dargestellten Kraft-, Druck-, Beschleunigungs- und/oder Schwingungssensor in einer Weise gekoppelt ist, dass dieser Sensor die Impulsantwort bzw. die abklingenden Schwingungen an der straff gespannten Umreifung 18 erfassen und daraus ein Ausgangssignal 44 generieren kann, aus dem die Bandspannung 26 errechnet wird (vgl. Fig. 3). Auch hier ist die Transportrichtung 58 durch einen nach oben gerichteten Pfeil beispielhaft angedeutet. Der Hammer 34 kann mit definierter Beschleunigung bzw. Drehgeschwindigkeit um den festen Drehpunkt 36 verschwenkt werden, so dass sein Hammerkopf 38 oder Klöppel an seinem Ende mit definiertem Impuls auf die Oberfläche des Umreifungsbandes 20 auftreffen kann, und zwar vorzugsweise mittig im Anregungsbereich 30 des Zwischenraumes zwischen zwei benachbarten Behältern 14, wie dies durch die Fig. 5 angedeutet ist.

Die schematische Darstellung der Fig. 6 zeigt die wichtigsten Komponenten einer Vorrichtung 60 zur Herstellung von Umreifungsgebinden 10, wie sie zuvor beschrieben wurden. Die Vorrichtung umfasst eine Fördereinrichtung 62 zur ununterbrochenen oder zyklischen Förderung von Artikel- oder Behältergruppen 64 in Transportrichtung 58 zu einer Umreifungseinrichtung 66, die zur Aufbringung von einem, zwei oder mehr gleichartigen oder unterschiedlichen Umreifungsbändern 20 um die Außenseiten der Artikel- oder Behältergruppen 64 unter gleichzeitiger Aufbringung einer definierbaren Bandspannung und anschließender Fixierung von Bandenden aneinander zur Herstellung der Umreifung 18 vorgesehen und ausgestattet ist. In Transportrichtung 58 schließt sich an die Umreifungseinrichtung 66 eine oben im Zusammenhang mit der Messanordnung 24 erwähnte Messeinrichtung 68 zur Erfassung der Bandspannung an, welche die erwähnte Einrichtung 28 zur Anregung einer Schwingung im Umreifungsband 20 der Umreifung 18 des Gebindes 10 sowie eine Einrichtung 32 zur Erfassung der Schwingungsantwort auf die erfolgten Anregungen aufweist.

Das in Fig. 6 gezeigte Ausführungsbeispiel der Vorrichtung 60 zeigt weiterhin eine steuerbare Ausschleuseinrichtung 70, die einen Schieber umfassen kann, der solche Gebinde 10 aus dem Förderstrom aussondert, deren Bandspannung 26 nicht innerhalb des vorgegebenen Sollwertbereichs 54 liegt. Das Ausschieben eines solchen Gebindes 10 kann bspw. senkrecht zur Transportrichtung 58, wahlweise jedoch auch in andere Richtung erfolgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Gebinde, Umreifungsgebinde
- 12: Artikel
- 14: Behälter, PET-Behälter
- 16: Außenseite
- 18: Umreifung
- 20: Umreifungsband
- 22: Griffmulde
- 24: Messanordnung
- 26: Bandspannung
- 28: Einrichtung zur Anregung einer Schwingung und/oder zur Impulseinleitung
- 30: Anregungsstelle
- 32: Einrichtung zur Erfassung des Schwingungsverhaltens und/oder einer Impulsantwort
- 34: Hammer
- 36: Schwenklagerung
- 38: Hammerkopf
- 40: Schallwandler
- 42: Schalldrucksensor, Mikrofon
- 44: Sensorsignale
- 46: Auswerteeinrichtung
- 48: Anzeigeeinrichtung
- 50: Steuersignale
- 52: Maschinenkomponente
- 54: Sollwertbereich (Umreifungsspannung)
- 56: Stößel
- 58: Transportrichtung (der Gebinde)
- 60: Vorrichtung zur Herstellung von Umreifungsgebinden
- 62: Fördereinrichtung
- 64: Behältergruppe, Artikelgruppe
- 66: Umreifungseinrichtung

- 68: Messeinrichtung
- 70: Ausschleuseinrichtung

## Patentansprüche

1. Verfahren zur Herstellung von Umreifungsgebinden (10), bei dem mindestens zwei Artikel (12) oder Behälter (14) mit wenigstens einer horizontal um jeweilige Außenseiten der Artikel (12) oder Behälter (14) gespannten, band- oder streifenartigen, geschlossenen Umreifung (18) zusammengehalten und miteinander verbunden werden, welche Umreifung (18) durch ein, zwei oder mehr gleichartige oder unterschiedliche Umreifungsbänder (20) aus Kunststoff oder einem Verbundmaterial gebildet werden, deren Enden unter Aufbringung einer definierbaren Bandspannung (26) aneinander fixiert werden, wonach die Bandspannung (26) des wenigstens einen Umreifungsbandes (20) durch eine Schwingungs- und/oder Impulsanregung des Umreifungsbandes (20) an wenigstens einer Stelle, die sich zwischen Kontaktstellen des Umreifungsbandes (20) an Außenseiten benachbarter Artikel (12) oder Behälter (14) befindet, und durch Erfassung eines Schwingungsverhaltens und/oder einer Impulsantwort des Umreifungsbandes (20) im Bereich oder der Umgebung der angeregten Stelle erfasst wird.

2. Verfahren nach Anspruch 1, bei dem die Schwingungs- und/oder Impulsanregung des Umreifungsbandes (20) durch einen Druckstoß, einen Luftdruckimpuls und/oder durch einen mechanischen Schlag auf das Umreifungsband (20) aufgebracht wird, dessen Schwingungsverhalten und/oder Impulsantwort erfasst und ausgewertet wird.

3. Verfahren nach Anspruch 1 oder 2, bei dem das Schwingungsverhalten und/oder die Impulsantwort des Umreifungsbandes (20) optisch, akustisch und/oder mechanisch erfasst wird/werden.

4. Verfahren nach einem der Ansprüche 1 bis 3, bei dem die Bandspannung (26) innerhalb eines vorgebbaren Bandabschnittes (30) des Umreifungsbandes (20) gemessen wird, der sich ungefähr mittig zwischen zwei benachbarten Artikeln (12) oder Behältern (14) des von der Umreifung (18) zusammengehaltenen Umreifungsgebindes (10) befindet.

5. Verfahren nach einem der Ansprüche 1 bis 4, bei dem die Bandspannung (26) wenigstens eines Umreifungsbandes (20) jedes Umreifungsgebindes (10) einer Folge von nacheinander umreiften und hintereinander transportierten Umreifungsgebinden (10) erfasst und zur Steuerung einer Ausschleuseinrichtung (70) herangezogen werden, die solche Umreifungsgebinde (10) aus dem Gebindestrom aussondert, bei denen eine erfasste Bandspannung (26) außerhalb eines vorgebbaren Sollwertbereichs (54) liegt.

6. Vorrichtung (60) zur Herstellung von Umreifungsgebinden (10), die jeweils mindestens zwei Artikel (12) oder Behälter (14) mit wenigstens einer horizontal um Außenseiten der Artikel (12) oder Behälter (14) gespannten, band- oder streifenartigen, geschlossenen Umreifung (18) zur Verbindung und Fixierung der Artikel (12) oder Behälter (14) aneinander umfassen, mit einer Fördereinrichtung (62) zur ununterbrochenen oder zyklischen Förderung von Artikel- oder Behältergruppen (64) zu einer Umreifungseinrichtung (66), die zur Aufbringung von einem, zwei oder mehr gleichartigen oder unterschiedlichen Umreifungsbändern (20) aus Kunststoff oder einem Verbundmaterial um die Außenseiten (16) der Artikel (12) oder Behälter (14) unter gleichzeitiger Aufbringung einer definierbaren Bandspannung (26) und anschließender Fixierung von Bandenden aneinander zur Herstellung der Umreifung (18) vorbereitet und ausgestattet ist, und mit einer Messeinrichtung (68) zur Erfassung der Bandspannung (26), die eine Einrichtung (28) zur Anregung einer Schwingung und/oder zur Aufbringung eines Impulses auf wenigstens ein Umreifungsband (20) der Umreifung (18) an einer Stelle, die sich zwischen Kontaktstellen des Umreifungsbandes (20) an Außenseiten benachbarter Artikel (12) oder Behälter (14) befindet, sowie eine Einrichtung (32) zur Erfassung eines Schwingungsverhaltens und/oder einer Impulsantwort des Umreifungsbandes (20) im Bereich oder der Umgebung der angeregten Stelle (30) aufweist.

7. Vorrichtung nach Anspruch 6, bei der die Einrichtung (28) zur Anregung einer Schwingung des Umreifungsbandes (20) ein mechanisches Schlagelement, eine Einrichtung (40) zur Erzeugung von akustischen Wellen und/oder von Luftdruckimpulsen umfasst.

8. Vorrichtung nach Anspruch 6 oder 7, bei der die Einrichtung (32) zur Erfassung des Schwingungsverhaltens und/oder der Impulsantwort einen optischen, akustischen und/oder Luftschwingungen erfassenden Sensor (42) umfasst, der/die mit einer Auswerteschaltung (46) zur Erfassung und Auswertung der Sensorsignale (44) und zur Herleitung der Bandspannung (26) gekoppelt ist/sind.

9. Vorrichtung nach einem der Ansprüche 6 bis 8, die mit einer steuerbaren Ausschleuseinrichtung (70) gekoppelt ist, die solche Umreifungsgebinde (10) aus dem Gebindestrom aussondert, bei denen eine erfasste Bandspannung (26) außerhalb eines vorgebbaren Sollwertbereichs (54) liegt.

10. Verfahren zur Erfassung einer Bandspannung (26) von Umreifungsgebinden (10), die jeweils mindestens zwei Artikel (12) oder Behälter (14) umfassen, die mit wenigstens einer horizontal um die Außenseiten der Artikel (12) oder Behälter (14) gespannten, band- oder streifenartigen, geschlossenen Umreifung (18) zusammengehalten und miteinander verbunden sind, wobei die Umreifung (18) durch ein, zwei oder mehr gleichartige oder unterschiedliche Umreifungsbänder (20) aus Kunststoff oder einem Verbundmaterial gebildet ist, deren Enden mit definierbarer Bandspannung (26) aneinander fixiert sind, und wobei die Bandspannung (26) des wenigstens einen Umreifungsbandes (20) der Umreifung (18) durch eine Schwingungs- und/oder Impulsanregung des Umreifungsbandes (20) an wenigstens einer Stelle, die sich zwischen Kontaktstellen des Umreifungsbandes (20) an Außenseiten benachbarter Artikel (12) oder Behälter (14) befindet, und durch Erfassung eines Schwingungsverhaltens und/oder einer Impulsantwort des Umreifungsbandes (20) im Bereich oder der Umgebung der angeregten Stelle erfasst wird.

## Claims

1. A method for producing strapped bundles (10) in which at least two articles (12) or containers (14) are held together and connected to each other by at least one band- or strip-type, closed strapping (18), which is tensioned horizontally around respective outer sides of the articles (12) or containers (14), which strapping (18) is formed by one, two or more strapping bands (20) of the same type or of different types made of plastic or of a composite material, the ends of which strapping bands (20) are fixed to each other under application of a definable strap tension (26), whereupon the strap tension (26) of the at least one strapping band (20) is detected by way of a vibration excitation and/or of an impulse excitation of the strapping band (20) in at least one location, which is situated between contact points of the strapping band (20) at outer sides of adjacent articles (12) or containers (14), and by way of detecting a vibration behaviour and/or an impulse response of the strapping band (20) in the area or in the surrounding of the excited location.

2. The method as recited in claim 1 in which the vibration excitation and/or the impulse excitation of the strapping band (20) is applied by way of a pressure surge, an air pressure pulse and/or by way of a mechanical impact to the strapping band (20), the vibration behaviour and/or impulse response of which is detected and evaluated.

3. The method as recited in claim 1 or 2 in which the vibration behaviour and/or the impulse response of the strapping band (20) is/are detected in an optical, an acoustic and/or a mechanical manner.

4. The method as recited in one of the claims 1 to 3 in which the strap tension (26) is measured within a specifiable band section (30) of the strapping band (20), which band section is situated approximately centrally between two adjacent articles (12) or containers (14) of the strapped bundle (10) that is held together by the strapping (18).

5. The method as recited in one of the claims 1 to 4 in which the strap tension (26) of at least one strapping band (20) of each strapped bundle (10) of a series of successively strapped and consecutively transported strapped bundles (10) is detected and used for controlling a discharge device (70), which removes such strapped bundles (10) from the stream of bundles for which a detected strap tension (26) is outside a specifiable set point range (54).

6. An apparatus (60) for producing strapped bundles (10), which each comprise at least two articles (12) or containers (14) with at least one band- or strip-type, closed strapping (18) for connecting and fixing the articles (12) or containers (14) to each other, which strapping (18) is tensioned horizontally around outer sides of the articles (12) or containers (14), which apparatus has a conveying device (62) for the continuous or cyclic conveyance of article groups or container groups (64) to a strapping device (66), which is prepared and equipped for applying one, two or more strapping bands (20) of the same type or of different types made of plastic or of a composite material around the outer sides (16) of the articles (12) or containers (14) under simultaneous application of a definable strap tension (26) and subsequent fixation of band ends to each other for the purpose of producing the strapping (18), and which apparatus has a measuring device (68) for detecting the strap tension (26), which measuring device (68) has a device (28) for exciting a vibration and/or for applying an impulse to at least one strapping band (20) of the strapping (18) in one location, which is situated between contact points of the strapping band (20) at outer sides of adjacent articles (12) or containers (14), as well as having a device (32) for detecting a vibration behaviour and/or an impulse response of the strapping band (20) in the area or in the surrounding of the excited location (30).

7. The apparatus as recited in claim 6 in which the device (28) comprises a mechanical impact element, a device (40) for generating acoustic waves and/or air pressure pulses for the purpose of exciting a vibration of the strapping band (20).

8. The apparatus as recited in claim 6 or 7 in which the device (32) for detecting the vibration behaviour and/or the impulse response comprises a sensor (42), which detects optical vibrations, acoustic vibrations and/or air vibrations, which sensor/sensors (42) is/are coupled with an evaluation circuit (46) for detecting and evaluating the sensor signals (44) and for deriving the strap tension (26).

9. The apparatus as recited in one of the claims 6 to 8 which is coupled with a controllable discharge device (70), which removes such strapped bundles (10) from the stream of bundles for which a detected strap tension (26) is outside a specifiable set point range (54).

10. A method for detecting a strap tension (26) of strapped bundles (10), which each comprise at least two articles (12) or containers (14), which are held together and connected to each other by at least one band- or strip-type, closed strapping (18), which is tensioned horizontally around the outer sides of the articles (12) or containers (14), wherein the strapping (18) is formed by one, two or more strapping bands (20) of the same type or of different types made of plastic or of a composite material, the ends of which strapping bands (20) are fixed to each other at a definable strap tension (26), and wherein the strap tension (26) of the at least one strapping band (20) of the strapping (18) is detected by way of a vibration excitation and/or impulse excitation of the strapping band (20) in at least one location, which is situated between contact points of the strapping band (20) at outer sides of adjacent articles (12) or containers (14), and by way of detecting a vibration behaviour and/or an impulse response of the strapping band (20) in the area or in the surrounding of the excited location.

## Revendications

1. Procédé de réalisation de multipacks à cerclage (10), dans lequel au moins deux articles (12) ou récipients (14) sont maintenus ensemble et reliés entre eux par l'intermédiaire d'au moins un cerclage (18) fermé de type bande ou ruban qui est tendu horizontalement autour de faces extérieures respectives des articles (12) ou récipients (14), ledit cerclage (18) étant formé par une, deux ou plusieurs bandes de cerclage (20) similaires ou différentes en matière plastique ou en un matériau composite dont les extrémités sont fixées les unes sur les autres en appliquant une tension de bande (26) définissable, ce après quoi la tension de bande (26) de ladite au moins une bande de cerclage (20) est détectée par une excitation vibrationnelle et/ou impulsionnelle de la bande de cerclage (20) sur au moins un point qui est situé entre des points de contact de la bande de cerclage (20) sur des faces extérieures d'articles (12) ou récipients (14) voisins, et par la détection d'un comportement vibrationnel et/ou d'une réponse impulsionnelle de la bande de cerclage (20) au niveau ou aux environs du point excité.

2. Procédé selon la revendication 1, dans lequel l'excitation vibrationnelle et/ou impulsionnelle de la bande de cerclage (20) est appliquée à la bande de cerclage (20) par un coup de pression, une impulsion de pression d'air et/ou par un coup mécanique dont le comportement vibrationnel et/ou la réponse impulsionnelle est détecté(e) et évalué(e).

3. Procédé selon la revendication 1 ou 2, dans lequel le comportement vibrationnel et/ou la réponse impulsionnelle de la bande de cerclage (20) est/sont détecté(s) optiquement, acoustiquement et/ou mécaniquement.

4. Procédé selon l'une quelconque des revendications 1 à 3, dans lequel la tension de bande (26) est mesurée à l'intérieur d'une section de bande (30) de la bande de cerclage (20), qui peut être prédéterminée et qui se trouve à peu près au milieu entre deux articles (12) ou récipients (14) voisins du multipack à cerclage (10) maintenu ensemble par le cerclage (18).

5. Procédé selon l'une quelconque des revendications 1 à 4, dans lequel la tension de bande (26) d'au moins une bande de cerclage (20) de chaque multipack à cerclage (10) d'une suite de multipacks à cerclage (10) cerclés les uns après les autres et transportés les uns derrière les autres est détectée et est utilisée pour commander un dispositif d'évacuation (70) qui élimine, du flux de multipacks, les multipacks à cerclage (10) dans lesquels une tension de bande (26) détectée se situe hors d'une plage de valeur de cosigne (54) prédéterminable.

6. Dispositif (60) de réalisation de multipacks à cerclage (10) qui comprennent chacun au moins deux articles (12) ou récipients (14) avec au moins un cerclage (18) fermé de type bande ou ruban qui est tendu horizontalement autour de faces extérieures des articles (12) ou récipients (14) et est destiné à lier et à fixer les articles (12) ou récipients (14) les uns sur les autres, comprenant un dispositif de transport (62) pour transporter de manière ininterrompue ou cyclique des groupes d'articles ou de récipients (64) vers un dispositif de cerclage (66) qui est préparé et équipé pour appliquer une, deux ou plusieurs bandes de cerclage (20) similaires ou différentes en matière plastique ou en un matériau composite autour des faces extérieures (16) des articles (12) ou récipients (14), tout en appliquant une tension de bande (26) définissable et en fixant ensuite des extrémités de bande les unes sur les autres pour réaliser ledit cerclage (18), et comprenant un dispositif de mesure (68) pour détecter la tension de bande (26) qui présente un dispositif (28) destiné à exciter une vibration et/ou à appliquer une impulsion à au moins une bande de cerclage (20) du cerclage (18) sur un point qui est situé entre des points de contact de la bande de cerclage (20) sur des faces extérieures d'articles (12) ou récipients (14) voisins, ainsi qu'un dispositif (32) de détection d'un comportement vibrationnel et/ou d'une réponse impulsionnelle de la bande de cerclage (20) au niveau ou aux environs du point excité (30).

7. Dispositif selon la revendication 6, dans lequel ledit dispositif (28) destiné à exciter une vibration de la bande de cerclage (20) comprend un élément mécanique de frappe, un dispositif (40) de génération d'ondes acoustiques et/ou d'impulsions de pression d'air.

8. Dispositif selon la revendication 6 ou 7, dans lequel le dispositif (32) de détection du comportement vibrationnel et/ou de la réponse impulsionnelle comprend un capteur (42) optique, acoustique et/ou détectant des vibrations d'air qui est/sont couplé(s) à un circuit d'évaluation (46) destiné à détecter et à évaluer les signaux de capteur (44) et à en déduire la tension de bande (26).

9. Dispositif selon l'une quelconque des revendications 6 à 8, qui est couplé à un dispositif d'évacuation (70) commandable qui élimine, du flux de multipacks, les multipacks à cerclage (10) dans lesquels une tension de bande (26) détectée se situe hors d'une plage de valeur de cosigne (54) prédéterminable.

10. Procédé de détection d'une tension de bande (26) de multipacks à cerclage (10) qui comprennent chacun au moins deux articles (12) ou récipients (14) qui sont maintenus ensemble et reliés entre eux par l'intermédiaire d'au moins un cerclage (18) fermé de type bande ou ruban qui est tendu horizontalement autour des faces extérieures des articles (12) ou récipients (14), ledit cerclage (18) étant formé par une, deux ou plusieurs bandes de cerclage (20) similaires ou différentes en matière plastique ou en un matériau composite dont les extrémités sont fixées les unes sur les autres avec une tension de bande (26) définissable, et dans lequel la tension de bande (26) de ladite au moins une bande de cerclage (20) du cerclage (18) est détectée par une excitation vibrationnelle et/ou impulsionnelle de la bande de cerclage (20) sur au moins un point qui est situé entre des points de contact de la bande de cerclage (20) sur des faces extérieures d'articles (12) ou récipients (14) voisins, et par la détection d'un comportement vibrationnel et/ou d'une réponse impulsionnelle de la bande de cerclage (20) au niveau ou aux environs du point excité.
